# EUROPEAN PATENT APPLICATION

(11) **EP 4 651 551 A1**
(43) Date of publication of application: **19.11.2025**
(21) Application number: 24839906.5
(22) Date of filing: 28.05.2024
(51) Int. Cl.: H04W 24/08, H04W 48/10, H04J 11/00, H04W 24/10, H04W 8/02, H04W 60/04, H04W 48/20

(54) **ELECTRONIC DEVICE AND METHOD FOR PERFORMING MEASUREMENT REPORT IN WIRELESS COMMUNICATION SYSTEM**

(30) Priority: 10.07.2023 KR 20230089442
(71) Applicant: Samsung Electronics Co., Ltd., Suwon-si, Gyeonggi-do 16677 (KR)
(72) Inventor: HOANG, Minh Duc, Bac Tu Liem Hanoi, 124000 (VN); NGUYEN, Duc Doan, Bac Tu Liem Hanoi, 124000 (VN); NGUYEN, Van Thinh, Bac Tu Liem Hanoi, 124000 (VN); NGUYEN, The Thoi, Bac Tu Liem Hanoi, 124000 (VN); TRUONG, Van Hau, Bac Tu Liem Hanoi, 124000 (VN)
(74) Representative: Nederlandsch Octrooibureau
(86) International application number: PCT/KR2024/007190
(87) International publication number: WO 2025/014089

(57) **Abstract**

According to an embodiment of the present disclosure, a method performed by a user equipment in a wireless communication system, may include: receiving, from a base station, information for measurement, the information for measurement including frequency information related to at least one cell related to the measurement, or the frequency information and identifier information of the at least one cell; performing the measurement on a standalone (SA) cell excluding a cell matching a cell identified by information of at least one non-standalone (NSA) cell among the at least one cell, based on the information for the measurement and a specified NSA cell list including information of the at least one NSA cell; and transmitting, to the base station, a measurement report of the SA cell.

## Description

### [Technical Field]

The disclosure relates to an electronic device and a method for performing measurement report in a wireless communication system.

### [Background Art]

A 5th generation (5G) mobile communication technology defines a broad frequency band to allow a high transmission rate and a new service, and may be implemented not only in a 'sub 6GHz' frequency band such as 3.5 GHz but also in an extremely high frequency ('above 6GHz') band referred to as millimeter waves (mmWave) such as 2 8GHz and 39 GHz. In addition, a 6th generation (6G) mobile communication technology referred to as a beyond 5G system is considering implementation in a terahertz (THz) band (e.g., a band from 95 GHz to 3 THz) to achieve the transmission rate fifty times faster than the 5G mobile communication technology and ultra low latency reduced to one-tenth.

At the initial stage of the 5G mobile communication technology, to support services and to satisfy performance requirements for enhanced mobile broadband, (eMBB), ultra-reliable low-latency communications (URLLC), and massive machine-type communications (mMTC), standardization is conducted on beamforming and massive multiple input multiple output (MIMO) for alleviating a radio wave path loss and increasing a radio wave transmission distance in the extremely high frequency band, numerology (operating multiple subcarrier spacings) for efficiently utilizing extremely high frequency resources and slot format dynamic operation, an initial access technology for supporting multi-beam transmission and the broadband, definition and operation of a band-width part (BWP), a new channel coding method such as a low density parity check (LDPC) code for large-capacity data transmission and a polar code for high-reliability transmission of control information, L2 pre-processing, and network slicing for providing a dedicated network customized to a specific service.

Currently, there is ongoing discussion regarding improvement and performance enhancement of the initial 5G mobile communication technology by considering the services to be supported by the 5G mobile communication technology, and physical layer standardization is conducted on technologies such as vehicle-to-everything (V2X) for aiding driving determination of an autonomous vehicle based on location and state information transmitted by the vehicle and for enhancing user convenience, new radio unlicensed (NR-U) aimed at system operations conforming to various regulation-related requirements in an unlicensed band, NR user equipment (UE) power saving, a non-terrestrial network (NTN) which is UE-satellite direct communication for securing coverage in an area where communication with a terrestrial network is impossible, and positioning.

There has been ongoing standardization in wireless interface architecture/protocol fields for technologies such as industrial internet of things (IIoT) for supporting a new service through interworking and convergence with other industries, integrated access and backhaul (IAB) for providing a node for network service area expansion by supporting a wireless backhaul link and an access link in an integrated manner, mobility enhancement including conditional handover and dual active protocol stack (DAPS) handover, and two-step random access for simplifying a random access procedure (2-step RACH for NR), and standardization is also conducted in system architecture/service fields for a 5G baseline architecture (e.g., service based architecture, service based interface) for combining network functions virtualization (NFV) and software-defined networking (SDN) technologies, and mobile edge computing (MEC) for receiving a service based on a UE location.

If the 5G mobile communication system is commercialized as above, connected devices which are exponentially increasing will be connected to a communication network, and accordingly it is expected that function and performance enhancement of the 5G mobile communication system and integrated operation of the connected devices are needed. To this end, new research is scheduled on extended reality (XR) for efficiently supporting augmented reality (AR), virtual reality (VR), and mixed reality (MR), 5G performance improvement and complexity reduction by utilizing artificial intelligence (AI) and machine learning (ML), AI service support, metaverse service support, and drone communication.

Further, such development of the 5G mobile communication system will serve as a basis for developing not only new waveform for securing coverage in the terahertz band of the 6G mobile communication technology, full dimensional MIMO (FD-MIMO), multi-antenna transmission technology such as an array antenna and a large scale antenna, metamaterial-based lens and antenna for improving coverage of a terahertz band signal, high-dimensional space multiplexing technology using orbital angular momentum (OAM), and reconfigurable intelligent surface (RIS), but also full-duplex technology for increasing frequency efficiency and improving a system network of the 6G mobile communication technology, AI-based communication technology for implementing system optimization by utilizing a satellite and an AI from the design stage and internalizing an end-to-end AI support function, and next generation distributed computing technology for implementing services of complexity exceeding limits of UE processing capability by utilizing ultra high performance communication and computing resources.

### [Disclosure of Invention]

### [Technical Problem]

Embodiments of the disclosure provide a user equipment (UE) that may remove a non-standalone (NSA) cell from a measurement cell list.

Embodiments of the disclosure provide a UE that may report a measurement report of a standalone (SA) cell alone.

### [Solution to Problem]

According to an example embodiment of the present disclosure, a method performed by a user equipment in a wireless communication system, may include: receiving, from a base station, information for measurement, the information for measurement including frequency information related to at least one cell related to the measurement, or the frequency information and identifier information of the at least one cell; performing the measurement on a standalone (SA) cell excluding a cell matching a cell identified by information of at least one non-standalone (NSA) cell among the at least one cell, based on the information for measurement and a specified NSA cell list including information of the at least one NSA cell; and transmitting, to the base station, a measurement report of the SA cell.

According to an example embodiment of the present disclosure, a user equipment (UE) of a wireless communication system, comprising: a transceiver; a processor; and memory storing instructions that, when executed by the processor, cause the UE to: receive, from a base station, information for measurement, the information for measurement including frequency information related to at least one cell related to the measurement, or the frequency information and identifier information of the at least one cell; perform the measurement on an standalone (SA) cell excluding a cell matching a cell identified by information of at least one non-standalone (NSA) cell among the at least one cell, based on the information for the measurement and a specified NSA cell list including information of the at least one NSA cell; and transmit, to the base station, a measurement report of the SA cell.

### [Advantageous Effects of Invention]

According to an example embodiment, power consumption of a user equipment (UE) may be reduced.

According to an example embodiment, an overload registration procedure between UE(s) and network node(s) may be avoided.

According to an example embodiment, user experience/service interruption may be avoided by avoiding a handover failure between a standalone (SA) cell and a non-standalone (NSA) cell.

Besides, various effects obtained directly or indirectly from this disclosure may be provided.

### [Brief Description of Drawings]

The above and other aspects, features and advantages of certain embodiments of the present disclosure will be more apparent from the following detailed description, taken in conjunction with the accompanying drawings, in which:
FIG. 1 is a diagram illustrating an example architecture of a long term evolution (LTE) system according to various embodiments;
FIG. 2 is a diagram illustrating an example architecture of a next generation mobile communication system according to various embodiments;
FIG. 3 is a signal flow diagram illustrating an example measurement report method of a user equipment (UE) according to various embodiments;
FIG. 4 is a signal flow diagram illustrating an example measurement report method of a UE according to various embodiments;
FIG. 5 is a flowchart illustrating an example measurement report method according to various embodiments;
FIG. 6 is a flowchart illustrating an example method for managing a non-standalone (NSA) cell database according to various embodiments;
FIG. 7 and FIG. 8 include a diagram and flowchart illustrating an example method for managing an NSA cell database according to various embodiments;
FIG. 9 is a flowchart illustrating an example cell search method according to various embodiments;
FIG. 10 is a flowchart illustrating an example method for removing an NSA cell from a measurement cell list according to various embodiments;
FIG. 11 and FIG. 12 include a flowchart and signal flow diagram illustrating example measurement and measurement report methods according to various embodiments;
FIG. 13 is flowchart illustrating an example SA cell measurement and report method according to various embodiments;
FIG. 14 is a flowchart illustrating an example SA cell measurement and report method according to various embodiments;
FIG. 15 is a flowchart illustrating an example SA cell measurement and report method according to various embodiments;
FIG. 16 is a flowchart illustrating an example measurement report method of a UE according to various embodiments;
FIG. 17 is a block diagram illustrating an example configuration of a base station according to various embodiments; and
FIG. 18 is a block diagram illustrating an example configuration of a UE according to various embodiments.

With respect to description of the drawings, identical or like reference numerals may be used for identical or like components.

### [Best Mode for Carrying out the Invention]

Hereinafter, various example embodiments of the present disclosure are described with reference to the accompanying drawings. However, this is not intended to limit the present disclosure to a specific embodiment, and should be understood to embrace various modifications, equivalents, and/or alternatives of the various example embodiments of the present disclosure.

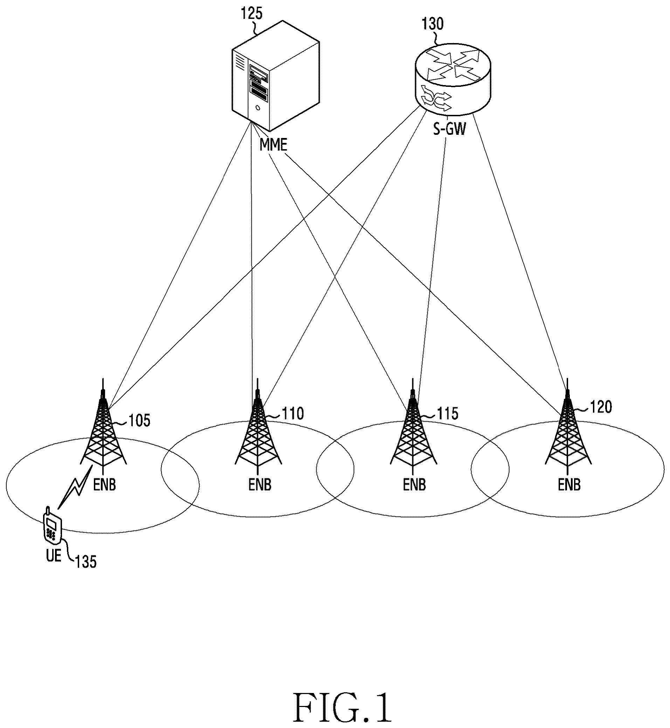

FIG. 1 is a diagram illustrating an example architecture of a long term evolution (LTE) system according to various embodiments.

Referring to FIG. 1, as shown, a radio access network of the LTE system may include evolved node Bs (hereafter eNBs, Node Bs or base stations) 105, 110, 115 and 120, a mobility management entity (MME) (e.g., including various circuitry and/or executable program instructions) 125, and a serving-gateway (S-GW) 130. A user equipment (hereafter, a UE or a terminal) 135 may access an external network via the eNB 105 through 120 and the S-GW 130.

In FIG. 1, the eNB 105 through 120 may correspond to an existing Node B of a universal mobile telecommunication system (UMTS) system. The eNB is connected to the UE 135 over a radio channel and performs more complex functions than the existing Node B. The LTE system services every user traffic including a realtime service such as voice over internet protocol (VoIP) using internet protocol through a shared channel and accordingly requires a device for scheduling by collecting status information of UEs such as a buffer state, an available transmit power state, and a channel state, which may be managed by the eNBs 105 through 120. One eNB may typically control a plurality of cells. The LTE system may use orthogonal frequency division multiplexing (hereafter, referred to as OFDM) as a radio access technology in, for example, 20 MHz bandwidth to realize the data rate of, for example, 100 Mbps. In addition, an adaptive modulation & coding (hereafter, referred to as AMC) scheme is applied to determine a modulation scheme and a channel coding rate according to the channel state of the UE. The S-GW 130 is a device which provides a data bearer, and may generate or remove a data bearer under control of the MME 125. The MME 125 is a device responsible for various control functions as well as mobility management function of the UE and may be connected to a plurality of base stations.

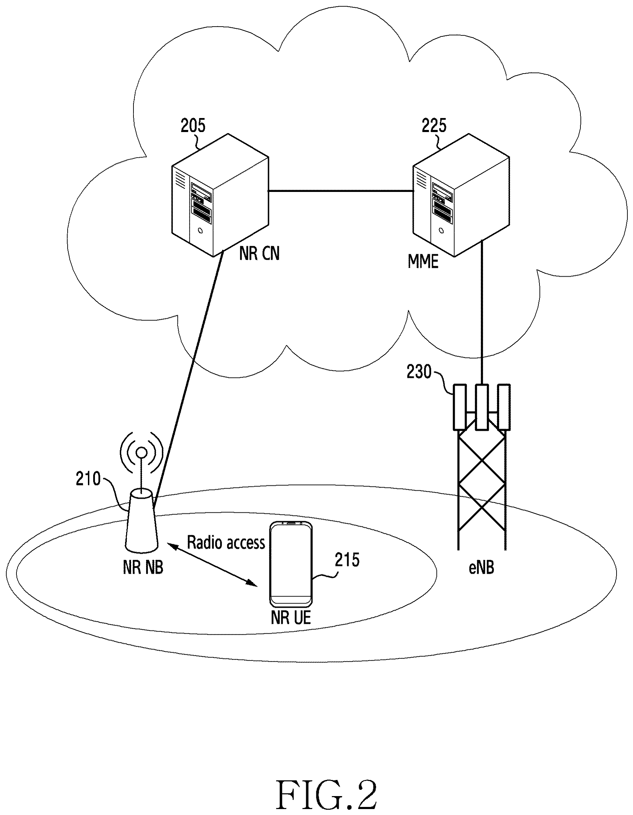

FIG. 2 is a diagram illustrating an example architecture of a next generation mobile communication system according to various embodiments.

Referring to FIG. 2, a radio access network of the next generation mobile communication system includes a new radio node B (hereafter an NR NB) 210 and an NR core network (CN) or a next generation (NG) CN 205. A NR UE or a terminal 215 may access an external network via the NR NB 210 and the NR CN 205.

In FIG. 2, the NR NB 210 corresponds to an eNB of an existing LTE system. The NR NB 210 may be connected to the NR UE 215 over a radio channel and may provide a better service than the existing node B. The next generation mobile communication system services every user traffic through a shared channel and accordingly requires a device for scheduling by collecting status information of UEs such as a buffer state, an available transmit power state, and a channel state, which is managed by the NR NB 210. One NR NB 210 may typically control a plurality of cells. More than the existing maximum bandwidth may be secured to implement ultra-high-speed data transmission compared to the existing LTE, and a beamforming technology may be further incorporated using the OFDM as the radio access technology. In addition, the AMC scheme may be applied to determine the modulation scheme and the channel coding rate according to the channel state of the UE. The NR CN 205 performs functions such as mobility support, bearer configuration, and quality of service (QoS) configuration. The NR CN 205 is a device for managing various control functions as well as the mobility management function for the UE, and is connected to a plurality of base stations. In addition, the next generation mobile communication system may be interoperated with the existing LTE system, and the NR CN 205 may be connected to the MME 225 through a network interface. The MME 225 is connected to the eNB 230 which is an existing base station.

The following terms/abbreviations may be used in the present disclosure for ease of explanation.
UE: User Equipment
SA: Standalone
NSA: Non-Standalone
UE: User equipment
NR: New radio
SIB: System Information Block
PCI: Physical layer Cell Identifier
ARFCN: Absolute Radio Frequency Channel Number
PLMN: Public Land Mobile Network
OTA: Over the Air
MIB: Master Information Block
RSSI: Received Signal Strength Indicator.
RSRP: Reference Signal Received Power.
RSRQ: Reference Signal Received Quality.
SINR: Signal to Interference plus Noise Ratio.

In 5G wireless communication system deployment, there may be various 5G wireless system deployment options within the same system/network. For example, network nodes supporting only the NSA and network nodes supporting the SA may coexist, and some network nodes may support both the NSA and the SA. For the coexistence of the network nodes differently supporting the NSA and/or the SA, particularly, if a UE which is a UE supporting the SA/operating in an SA mode, a method to address problems such as time waste and power waste due to unnecessary measurement performed by the network or the UE, and overload registration of registering the UE supporting the SA/operating in the SA mode to the NSA cell is required.

In the present disclosure, the 5G NSA may refer, for example, to a network architecture which uses the 5G described in FIG. 2, rather than using it alone, together with the LTE system described in FIG. 1, and may refer, for example, to a system which operates the LTE and the 5G as a single network. The 5G SA processes both the CN and the radio data by a 5G core network (5GC), unlike the NSA scheme which uses an evolved packet system (EPC) of the LTE as the CN, and may indicate a form in which the 5G architecture described in FIG. 2 is used for both a control plane and a data plane.

For example, according to an embodiment, if UE capability supports the SA mode operation and UE configuration for performing measurement includes information of a target frequency to be measured, the UE may search a target frequency, and measure all of target cells including both SA cells and NSA cells. If the UE measures the NSA cells and reports measurement results, the network may hand the UE over to the NSA cell, wherein the UE capability supports the SA mode operation and accordingly the UE handover to the NSA cell may result in a handover failure and the service may be interrupted. In addition, the UE may be subject to time waste and unexpected power waste to perform unnecessary measurement on neighboring NSA cells.

According to an embodiment, in another situation, the UE supporting the SA/operating in the SA mode may be registered to the NSA cell, which may cause the overloaded registration procedure for both the UE and the network. Hereafter, the UE may indicate the UE supporting the SA/operating in the SA mode, unless otherwise particularly explained for ease of description.

The present disclosure may provide a measurement report method to address the above problems suffered by the UE supporting the SA mode and the network. More specifically, the method described in the present disclosure pertains to the measurement report method which identifies 5G cell capability, and ignores measurement on unnecessary NSA cells by comparing the identified 5G cell with an NSA cell database including NSA cell information.

According to an embodiment of the present disclosure, power consumption of the UE may be reduced, the overload registration procedure between the UE(s) and the network node(s) may be avoided, and interruption of the user experience/service may be avoided by avoiding handover failure between the SA cell and the NSA cell.

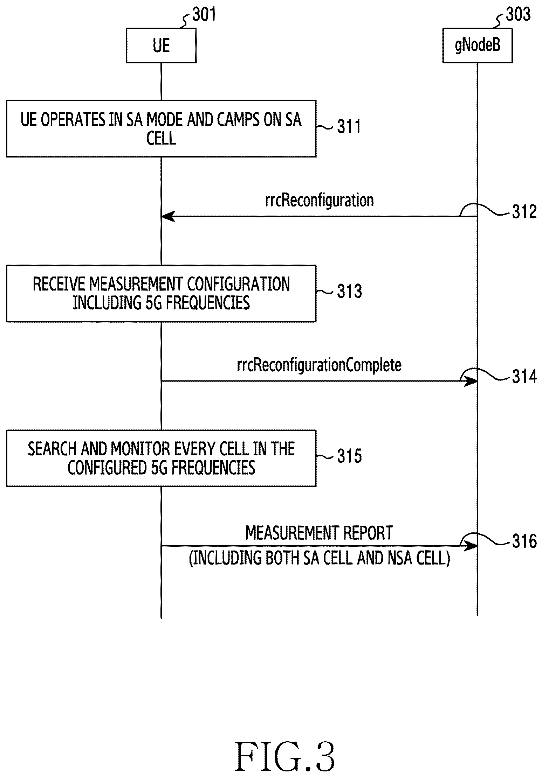

FIG. 3 is a signal flow diagram illustrating an example measurement report method of a UE according to various embodiments.

Referring to FIG. 3, the measurement report method according to an embodiment may be performed between a UE 301 and a gNodeB 303.

According to an embodiment, the UE 301 may operate in the SA mode, and camp on an SA cell in operation 311. As described above, the SA processes both the CN and the radio data by the 5GC, unlike the NSA scheme which uses the EPC of the LTE as the CN, and may indicate the form in which the 5G architecture is used for both the control plane and the data plane, and the SA cell may indicate a cell used in the SA operation.

According to an embodiment, the UE 301 may receive a radio resource control (RRC) reconfiguration message rrcReconfiguration from the gNodeB 303 in operation 312.

According to an embodiment, the UE 301 may receive a measurement configuration including information of 5G frequencies in operation 313. In so doing, the measurement configuration received by the UE 301 may be transmitted to the UE via the RRC reconfiguration message rrcReconfiguration. Herein, the 5G frequencies may include a frequency range to be measured by the UE, and the UE may search the 5G frequencies to obtain at least one cell (including an NSA cell and/or an SA cell). In addition to the information of the 5G frequencies, the measurement configuration may include a measurement event related to a condition for the UE to perform the measurement report, threshold information, time information for triggering the measurement report, reported parameter (RSRP, RSRQ, SINR, etc.) information, report interval information, and so on. The information/parameters contained in the measurement configuration may relate to measurement conditions, and may be used by the UE to measure a signal quality of neighboring cells. If a neighboring cell satisfies the measurement conditions, the UE may report the measurement result, by transmitting a measurement report message to the network.

According to an embodiment, the UE 301 may transmit an RRC reconfiguration complete message rrcReconfiguratiaonComplete to the gNodeB 303 in operation 314.

According to an embodiment, the UE 301 may search 5G frequencies, based on the information of the 5G frequencies included in the measurement configuration in operation 315. As a result of the search, 5G cells which use the same frequency and are identified/distinguished from each other by the PCI may be acquired/identified by the UE. That is, the UE 301 may obtain a measurement cell list including the 5G cells which use the same frequency and are identified/distinguished from each other by the PCI.

According to an embodiment, the UE 301 may transmit a measurement report to the gNodeB 303 in operation 316. Herein, the measurement report may include both the SA cell and the NSA cell. That is, the measurement report may include both the measurement result of the SA cell and the measurement result of the NSA cell. Hereafter, the measurement report, and the measurement report both may be used to indicate the measurement report in the present disclosure.

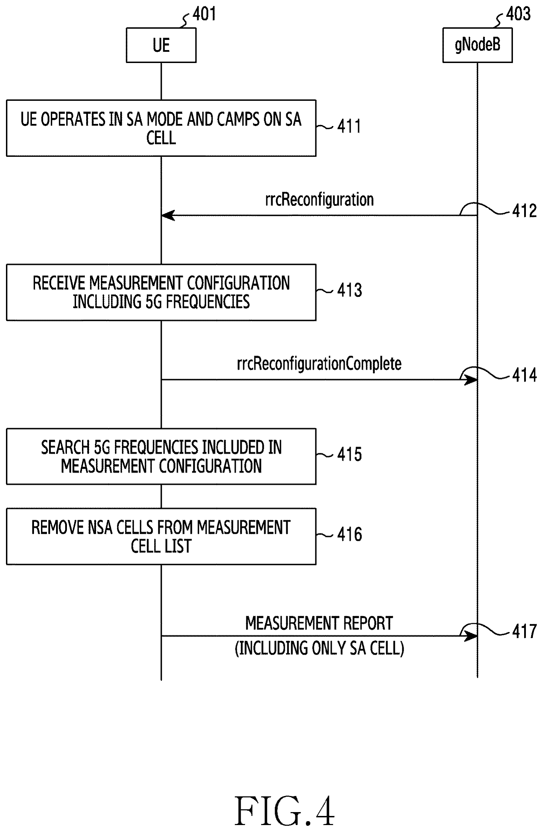

FIG. 4 is a signal flow diagram illustrating an example measurement report method of a UE according to various embodiments. More specifically, FIG. 4 is a diagram illustrating an example method for the UE operating in the SA mode to perform a measurement report without conducting unnecessary measurement on an NSA cell.

Referring to FIG. 4, the measurement report method according to an embodiment may be performed between a UE 401 and a gNodeB 403.

According to an embodiment, the UE 401 may operate in the SA mode, and camp on an SA cell in operation 411.

According to an embodiment, the UE 401 may receive an RRC reconfiguration message rrcReconfiguration from the gNodeB 403 in operation 412.

According to an embodiment, the UE 401 may receive measurement configuration including information of 5G frequencies in operation 413. At this time, the measurement configuration received by the UE 401 may be transmitted to the UE through the RRC reconfiguration message rrcReconfiguration. Herein, the 5G frequencies may be a frequency range to be measured by the UE, and the UE may search the 5G frequencies to obtain at least one cell (including an NSA cell and/or an SA cell). In addition to the information of the 5G frequencies, the measurement configuration may include a measurement event related to a condition for the UE to perform the measurement report, threshold information, time information of triggering the measurement report, reported parameter (RSRP, RSRQ, SINR, etc.) information, report interval information, and so on. The information/parameters contained in the measurement configuration may relate to measurement conditions, and may be used by the UE to measure the signal quality of neighboring cells. If a neighboring cell satisfies the measurement conditions, the UE may report the measurement result, by transmitting a measurement report message to the network.

According to an embodiment, the UE 401 may transmit an RRC reconfiguration complete message rrcReconfiguratiaonComplete to the gNodeB 403 in operation 414.

According to an embodiment, the UE 401 may perform cell search on the 5G frequencies, based on the information of the 5G frequencies included in the measurement configuration in operation 415. As a result of the search, 5G cells which use the same frequency and are identified/distinguished from each other by the PCI may be acquired/identified by the UE. That is, the UE 401 may obtain a measurement cell list including the 5G cells which use the same frequency and are identified/distinguished from each other by the PCI.

According to an embodiment, the UE 401 may remove cells corresponding to NSA cells, among the 5G cells included the measurement cell list, from the measurement cell list in operation 616. In this case, the UE 401 may identify the cell corresponding to the NSA, among the cells included in the obtained measurement cell list, based on an NSA cell database pre-configured in the UE.

For example, the NSA cell database may be configured as illustrated in Table 1 below, and may include information of the frequency of the NSA cell and the PCI of the corresponding frequency.

**[Table 1]**

| Cell no. | Frequency | PCI |
|---|---|---|
| 1 | 100 | 11 |
| 2 | 200 | 22 |

If the network (gNodeB/base station) configures the frequency 100 to the UE for the measurement, the UE may trigger the cell search, and obtain a measurement cell list including the cells assigned the PCI 11, 15, and 18. The UE may compare the obtained measurement cell list with the NSA cell database, and thus remove a cell matching the cell included in the NSA cell database, among the cells included in the measurement cell list, from the obtained measurement cell list. According to the NSA cell database of Table 1, since the cell assigned the PCI 11 corresponds to the NSA cell for the frequency 100, the UE may remove the cell assigned the PCI 11 from the measurement cell list to be obtained, and the measurement cell list may include only two cells assigned the PCI 15 and the PCI 18. In this example, the UE may keep the measurement and the monitoring on the cells assigned the PCI 15 and the PCI 18.

According to an embodiment, the UE 401 may transmit a measurement report to the gNodeB 403 in operation 417. Herein, the measurement report may include only the SA cell. That is, the measurement report may include only the measurement result of the SA cell.

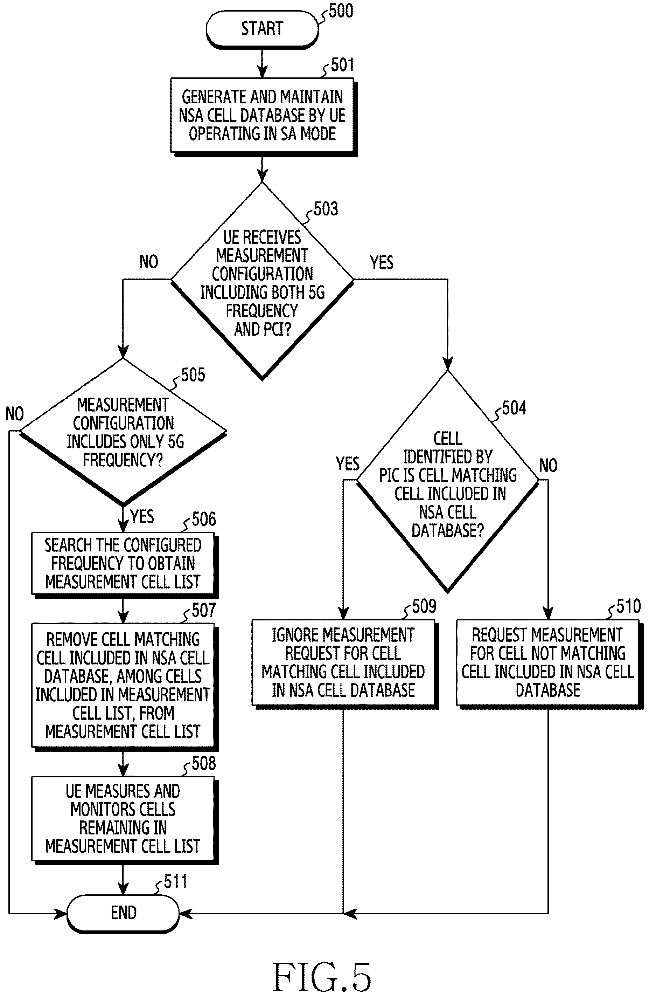

FIG. 5 is a flowchart illustrating an example measurement report method according to various embodiments. More specifically, FIG. 5 illustrates an example overall flow of performing the measurement report method described in the present disclosure.

According to an embodiment, if the method is initiated in operation 500, an NSA cell database may be generated, and maintained by a UE operating in the SA mode in operation 501. For example, the NSA cell database may be stored in a local memory of the UE, or the NSA cell database may be stored and maintained at a server, and the UE may receive from the server the NSA cell database stored and maintained at the server, if the NSA cell database is required. The NSA cell database stored and managed in the local memory of the UE may be referred to as a local NSA database, and the NSA cell database stored and managed by the server may be referred to as a server NSA database.

According to an embodiment, in the local NSA cell database, an NSA cell included in the NSA cell database may be updated based on 5G capability of a serving cell and a neighboring cell included in broadcast messages of the serving cell and the neighboring cell. Herein, the 5G capability may indicate whether the serving cell and the neighbor cell each is a cell for the NSA, a cell for the SA, or a cell for both the NSA and the SA. For example, the UE may receive the broadcast messages from the serving cell and the neighboring cell, identify whether the serving cell and the neighboring cell are the cells for the NSA, the cells for the SA, or the cells for both the NSA and the SA based on the 5G capability of the serving cell and the neighboring cell included in the broadcast messages, and update the NSA cell database based on an identification result, and the updated NSA cell database may be stored and managed at the UE. In so doing, the UE may receive the broadcast message, if the UE is in an RRC idle mode, performs cell selection, performs cell reselection, or performs PLMN search. In addition, the local NSA cell database may be initialized, if UE conditions such as timer expiration, updated tracking area, and updated registration history are satisfied.

According to an embodiment, in the server NSA cell database, the NSA cell database managed by the server may be updated by different UEs at a plurality of different locations. For example, the different UEs at the different locations each may transmit information of its detected NSA cell to the server, and the server may update the NSA cell database managed at the server, based on the NSA cell information received from each of the different UEs at the different locations. In this case, the manner in which the different UEs at the different locations detect the NSA cell may be the same as or similar to that described earlier in operation 415 of FIG. 4. If the UE is to use the server NSA cell database, the UE may download the server NSA cell database from the server. That is, the UE may transmit a message requesting the server NSA cell database to the server, and the UE may receive a message including the NSA cell database from the server. Since the NSA cell database received by the UE from the server includes information of NSA cells reported to the server by other UEs than the UE, the UE may recognize additional NSA cells in the 5G frequency where the UE operates or other 5G frequency in addition to the NSA cell detected by the UE. The UE may need to use the NSA cell database if the UE moves to a different area (or a different tracking area), wherein the UE may delete the NSA cell database of the old area and receive an NSA cell database related to the corresponding area from a server of the new area to which the UE moves.

Referring back to FIG. 5, according to an embodiment, the UE may determine/identify whether it has received a measurement configuration including both the 5G frequency and the PCI from the gNodeB/base station/network in operation 503. According to an embodiment, if determining that the measurement configuration received by the UE includes both the 5G frequency and the PCI, the UE may determine whether there is a cell matching the cell included in the NSA cell database, among at least one 5G cell, included in the configured 5G frequency, identified by the PCI in operation 504. According to an embodiment, the UE may ignore a measurement request for cells matching the cells included in the NSA cell database, among the at least one 5G cell, included in the configured 5G frequency, identified by the PCI in operation 509, and the method may terminate in operation 511. According to an embodiment, the UE may perform the measurement in response to a measurement request for cells not matching the cells included in the NSA cell database, among the at least one 5G cell identified by the physical cell ID, included in the configured 5G frequency, in operation 510, and the method may terminate in operation 511.

According to an embodiment, if determining that the measurement configuration received by the UE does not include both the 5G frequency and the PCI, the UE may determine whether the measurement configuration includes only the 5G frequency in operation 505. According to an embodiment, if determining that the measurement configuration does not include the 5G frequency alone, the UE may terminate the present method in operation 511. Herein, the measurement configuration not including only the 5G frequency may indicate that the measurement configuration does not include information of either the 5G frequency or the PCI, or that the measurement configuration includes only the PCI.

According to an embodiment, if determining that the measurement configuration includes only the 5G frequency, the UE may search the configured 5G frequency, to obtain a measurement cell list including cells to be included in the configured 5G frequency in operation 506. According to an embodiment, the measurement cell list obtained by the UE by searching the configured 5G frequency may include at least one cell, and the at least one cell may include at least one NSA cell and/or at least one SA cell. According to an embodiment, the UE may compare the obtained measurement cell list with the NSA cell database pre-configured in operation 501, and thus remove a cell matching the cell included in the measurement cell list among at least one cell included in the NSA cell database from the measurement cell list in operation 507.

According to an embodiment, the UE may measure and monitor remaining cells included in the measurement cell list from which the cell matching the cell included in the NSA cell database is removed in operation 508. The UE may terminate the present method in operation 511.

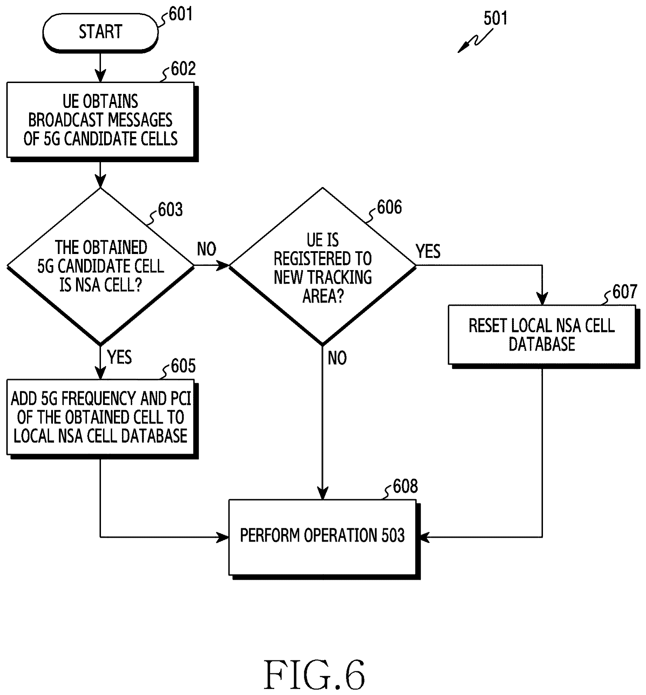

FIG. 6 is flowchart illustrating an example method for managing an NSA cell database according to various embodiment. FIG. 6 illustrates example operation 501 of FIG. 5. For example, FIG. 6 may relate to a local NSA cell database management method of a UE according to a tracking area change of the UE.

According to an embodiment, at the start of this operation in operation 601, if the UE is in the RRC idle mode, performs the cell selection, performs the cell reselection, or performs the PLMN search, the UE may obtain broadcast messages of 5G candidate cells in operation 602. In this case, the broadcast message may be obtained in the cell search procedure over a broadcast channel, and may include 5G capability information of the 5G candidate cells. The 5G capability of the 5G candidate cell may indicate that the 5G candidate cell is a cell for the NSA, a cell for the SA, or a cell for both the NSA and the SA.

According to an embodiment, the UE may determine whether the 5G candidate cell related to the broadcast message is a cell for the NSA in operation 603. According to an embodiment, as a result of the determination, if determining that the 5G candidate cell related to the broadcast message obtained by the UE is the cell for the NSA, the UE may add a 5G frequency and PCI of the 5G candidate cell to the local NSA cell database in operation 605, and perform operation 503 of FIG. 5 in operation 608. According to an embodiment, as a result of the determination, if determining that the 5G candidate cell related to the broadcast message obtained by the UE is not the cell for NSA, the UE may determine whether the UE is registered to a new tracking area in operation 606. Herein, the new tracking area may indicate a tracking area different from an existing tracking area which is changed due to the mobility of the UE, rather than a previous tracking area of the UE. According to an embodiment, as a result of the determination, if determining that the UE is not registered at the new tracking area, the UE may perform operation 503 of FIG. 5 in operation 608. According to an embodiment, as a result of the determination, if determining that the UE is registered at the new tracking area, the UE may initialize/reset the local NSA cell database in operation 607, and perform operation 503 of FIG. 5 in operation 608. Herein, a condition for initializing/resetting the local NSA cell database may include a UE location, or registration history.

The following Table 2 illustrates an example of the local NSA cell database. According to an embodiment, the local NSA cell database may be configured to include information of NR ARFCN and PCI.

**[Table 2]**

| No | NR ARFCN | PCI |
|---|---|---|
| 1 | 361000 | 001 |
| 2 | 173800 | 002 |
| ... | ... | ... |

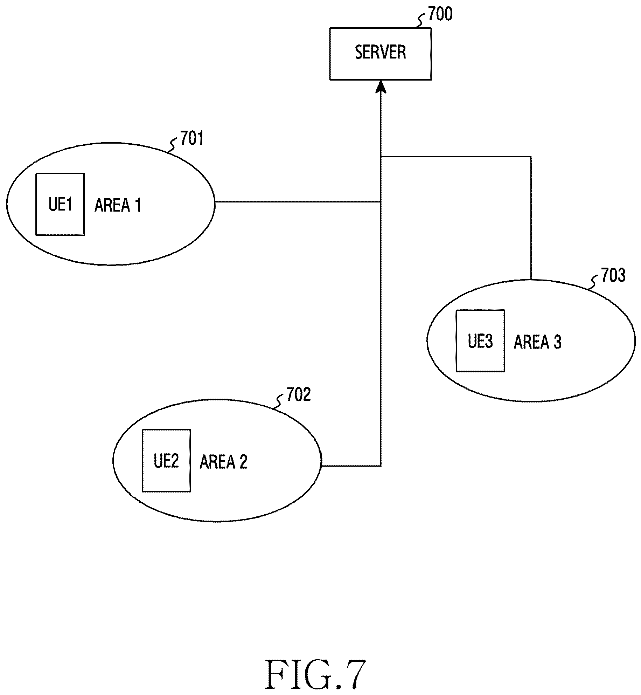

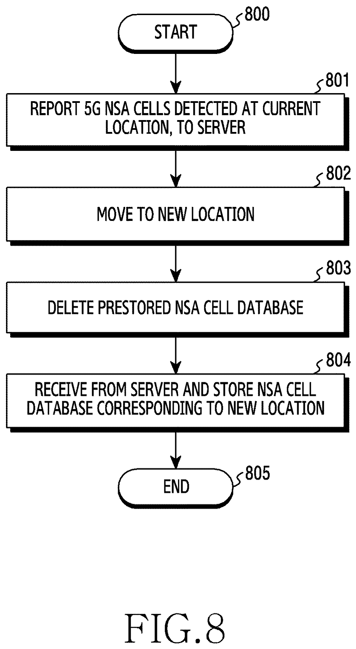

FIG. 7 and FIG. 8 include a diagram and a flowchart illustrating an example method for managing an NSA cell database according to various embodiments. In particular, FIG. 7 and FIG. 8 relate to an example embodiment in which the NSA database is managed at the server.

Referring first to FIG. 7, according to an embodiment, a server 700 may communicate with a UE1 701 located in a first area, a UE2 702 located in a second area, and a UE3 703 located in a third area to build a server NSA database. While the UE1 701 located in the first area, the UE2 702 located in the second area and the UE3 703 located in the third area are registered to a new tracking area, move to a new tracking area, or identify the 5G capability of the 5G cell, each of the UE1 701 located in the first area, the UE2 702 located in the second area and the UE3 703 located in the third area may perform the cell search on a frequency configured by the base station with respect to their area, and transmit information of NSA cells obtained through the cell search to the server 700. Herein, the NSA cell database transmitted to the server 700 by each of the UE1 701 located in the first area, the UE2 702 located in the second area and the UE3 703 located in the third area may be the local NSA cell database of each of the UE 1 701, the UE2 702, and the UE3 703. The server 700 may build the server NSA cell database managed at the server 700 based on the NSA cell information received from each of the UE1 701 located in the first area, the UE2 702 located in the second area and the UE3 703 located in the third area. Table 3 below illustrates an example of the server NSA cell database.

**[Table 3]**

| No | NR ARFCN | PCI | TAC |
|---|---|---|---|
| 1 | 2700 | 001 | 00ab |
| 2 | 3600 | 002 | 00ab |
| 3 | 2700 | 003 | 00cd |
| 4 | 3600 | 004 | 00cd |
| ... | ... | ... | ... |

According to an embodiment, the server NSA cell database may include NR ARFCN, PCI, and TAC information of the NSA cell.

In FIG. 7, the UE1 701 located in the first area, the UE2 702 located in the second area and the UE3 703 located in the third area each may, if moving to the new tracking area, delete their current local NSA cell database and receive an NSA database of a new area from server 700. For example, the following Table 4 and Table 5 illustrate local NSA databases generated by two different UEs respectively. If Table 4 is the local NSA database of the UE1 701 located in the first area of FIG. 7, the TAC of the first area may be 00ab, and NSA cells detected by the UE1 701 at the configured frequency in relation to the first area may be two NSA cells of the cell assigned NR ARFCN 2700 and PCI 001 and the cell assigned NR ARFCN 3600 and PCI 002. Herein, the NSA cell database of Table 4 may be the local NSA cell database of the UE1 701, and may be stored in the UE1 701. In addition, if Table 4 is the local NSA database of the UE2 702 located in the second area of FIG. 7, the TAC of the second area may be 00cd, and NSA cells detected by the UE2 702 at the configured frequency in relation to the second area may be two NSA cells of the cell assigned NR ARFCN 2700 and PCI 003, and the cell assigned NR ARFCN 3600 and PCI 004.

**[Table 4]**

| No | NR ARFCN | PCI | TAC |
|---|---|---|---|
| 1 | 2700 | 001 | 00ab |
| 2 | 3600 | 002 | 00ab |

**[Table 5]**

| No | NR ARFCN | PCI | TAC |
|---|---|---|---|
| 3 | 2700 | 003 | 00cd |
| 4 | 3600 | 004 | 00cd |

The server 700 may build and store the server NSA cell database including all of the NSA cell databases of Table 4 and Table 5 as above. If the UE1 701 moves from the first area (TAC = 00ab) to the second area (TAC = 00cd), the UE1 701 may delete the local NSA cell database generated in the first area (TAC = 00ab), receive the NSA cell database corresponding to the second area (TAC = 00cd) from the server, and store the received NSA cell database as the local NSA cell database of the UE1 701.

Referring to FIG. 8, according to an embodiment, the UE may perform the cell search on a frequency configured from the base station at its current location, and report information of 5G NSA cells detected as a result of the cell search to the server in operation 801. In so doing, the NSA cell information reported to the server may be stored in the UE and configured as a local NSA database.

According to an embodiment, the UE may move to a new location which is different from its current location in operation 802. The new location may be a tracking area assigned a different TAC from the previous location. According to an embodiment, the UE may delete the local NSA cell database stored in operation 801, in operation 803. According to an embodiment, the UE may receive an NSA cell database corresponding to the new location from the server, and store the received NSA cell database as the local NSA cell database of the new location in operation 804. In this case, the NSA cell database received by the UE from the server at the new location may be information of NSA cells obtained through the cell search by other UE at the corresponding location prior to the UE moves to the new location. In addition, after moving to the new location, the UE may be reconfigured a frequency for the measurement from the base station, and detect NSA cells at the new location by performing the cell search on the reconfigured frequency. Next, the UE may transmit information of the NSA cells detected at the new location to the server, and the server may update the server NSA cell database by reflecting the NSA cell information received from the UE.

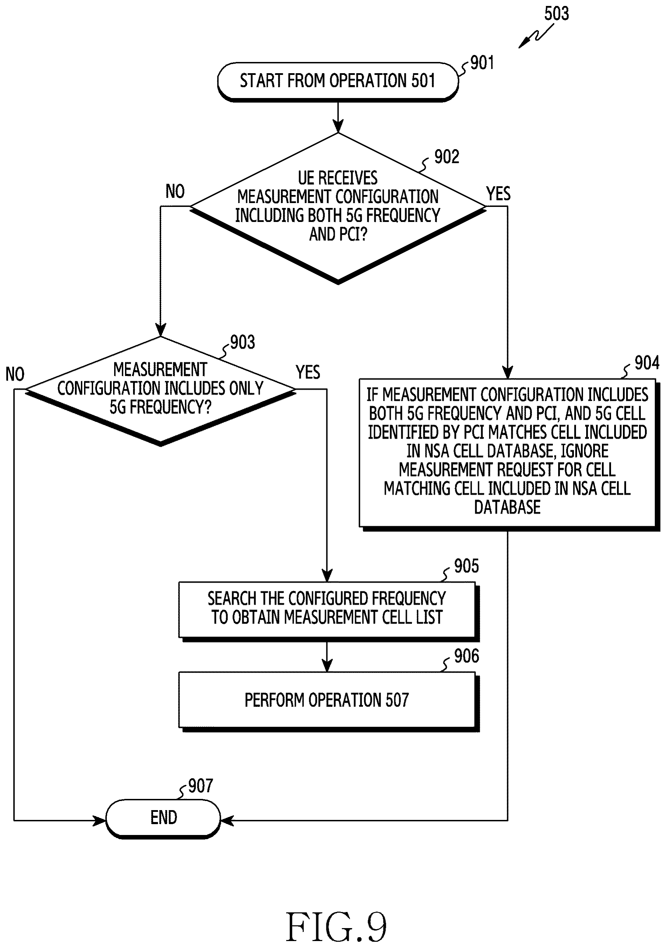

FIG. 9 is a flowchart illustrating an example cell search method according to various embodiments. More specifically, FIG. 9 may relate to an example method for performing the cell search after a UE receives a 5G frequency measurement configuration.

According to an embodiment, the method of FIG. 9 may start in operation 501 of FIG. 5 in operation 901, and the UE may receive from the base station (i) 5G frequency information, or (ii) measurement configuration including 5G frequency information and PCI.

According to an embodiment, the UE may determine whether the received measurement configuration includes both the 5G frequency information and the PCI in operation 902. According to an embodiment, as a result of the determination in operation 902, if determining that the received measurement configuration includes both the 5G frequency information and the PCI, and that at least one 5G cell identified by the PCI, included in the 5G frequency configured for the UE, includes a cell matching a cell included in an NSA cell database, the UE may ignore measurement requests for cells matching the cells included in the NSA cell database, among at least one 5G cell identified by the PCI, included in the configured 5G frequency in operation 904, and the method may terminate in operation 907. In addition, according to an embodiment, as a result of the determination in operation 902, if determining that the received measurement configuration includes neither the 5G frequency information nor the PCI, the UE may determine whether the measurement configuration includes only the 5G frequency in operation 903. According to an embodiment, as a result of the determination in operation 903, if determining that the measurement configuration does not include the 5G frequency alone, the UE may terminate the present method in operation 511. Herein, the measurement configuration not including the 5G frequency alone may indicate that the measurement configuration includes neither the 5G frequency information nor the PCI, or that the measurement configuration includes only the PCI.

According to an embodiment, as a result of the determination in operation 903, if determining that the measurement configuration includes only the 5G frequency, the UE may search the configured 5G frequency to obtain a measurement cell list including cells to be included in the configured 5G frequency in operation 905, and the UE may obtain the cell measurement list, and perform operation 507 of FIG. 5 in operation 906.

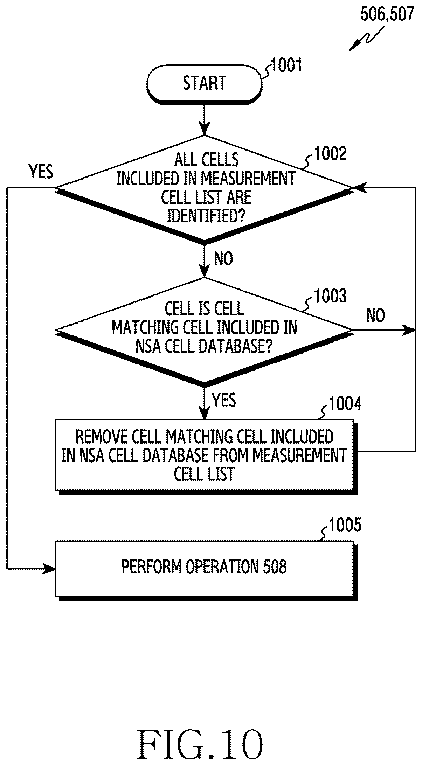

FIG. 10 is a flowchart illustrating an example method for removing an NSA cell from a measurement cell list according to various embodiments. More specifically, FIG. 10 is a diagram illustrating operations 506 and 507 of FIG. 5.

According to an embodiment, with respect to every cell included in the measurement cell list obtained through the cell search, the UE may determine whether the cell matches the cell included in the NSA cell database. Hence, in the method of FIG. 10, the UE may determine whether every cell included in the measurement cell list is identified whether the cell is the NSA cell (e.g., whether the cell is a cell matching the cell included in the NSA cell database) in operation 1002. According to an embodiment, as a result of the determination in operation 1002, if determining that every cell is identified whether the cell is the NSA cell, the UE may perform operation 508 of FIG. 5 in operation 1005. According to an embodiment, as a result of the determination in operation 1002, if determining that every cell is not identified whether the cell is the NSA cell, the UE may determine whether a cell not identified whether it is the NSA cell, among the cells included in the measurement cell list, is a cell matching the cell included in the NSA cell database, based on the pre-configured NSA cell database in operation 1003. According to an embodiment, as a result of the determination in operation 1003, if determining that the cell is the cell matching the cell included in the NSA cell database, the UE may remove the cell determined to match the cell included in the NSA cell database from the measurement cell list in operation 1004. According to an embodiment, as a result of the determination in operation 1003, if determining that the cell is not a cell matching the cell included in the NSA cell database, the UE may return to operation 1002 and determine whether every cell is identified whether the cell is the NSA cell.

According to an embodiment, as a result of performing the method of FIG. 10, the measurement cell list obtained by the UE through the cell search may include only SA cells.

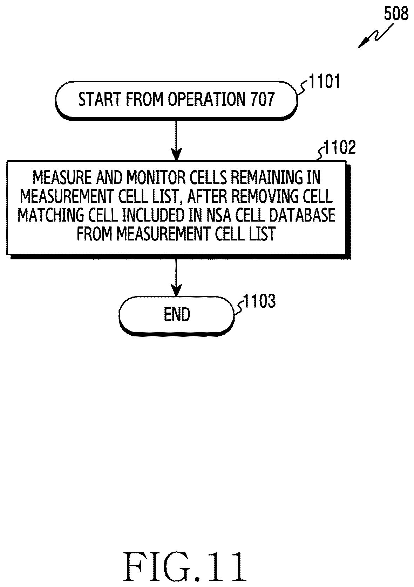

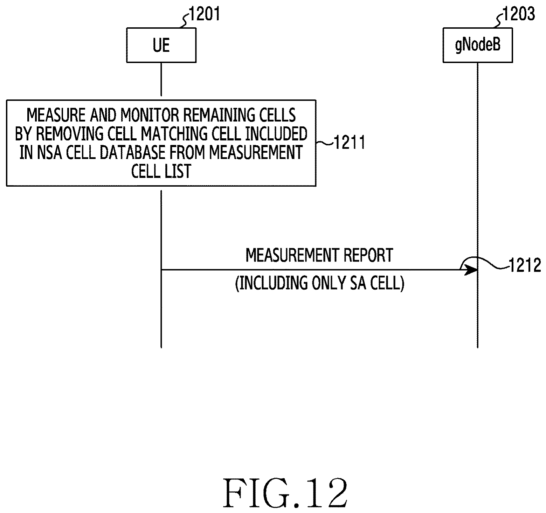

FIG. 11 and FIG. 12 include a flowchart and signal flow diagram illustrating example measurement and measurement report methods according to various embodiments.

Referring first to FIG. 11, according to an embodiment, the method of FIG. 11 may start in operation 507 of FIG. 5 in operation 1101, and the UE may perform measurement and monitoring based on a measurement cell list including only SA cells as a result of performing the method of FIG. 10 in operation 1102. For example, by removing the NSA cells included in the measurement cell list, only SA cells remain in the measurement cell list, and the UE may perform the measurement and the monitoring only on the remaining SA cells.

Referring to FIG. 12, according to an embodiment, the UE 1201 may perform operation 1211, and operation 1211 may be the same or similar operation as operation 1102 of FIG. 11. The UE may transmit the results of the measurement and the monitoring based on the measurement cell list including only SA cells to a gNodeB 1203 in operation 1212. Since the measurement results are only performed on the SA cells remaining in the measurement cell list, the measurement results reported by the UE 1201 to the gNodeB 1203 may include the measurement results of the SA cells alone.

According to an embodiment, the gNodeB 1203 may hand the UE 1201 over to an appropriate SA cell based on the reported measurement results received from the UE 1201.

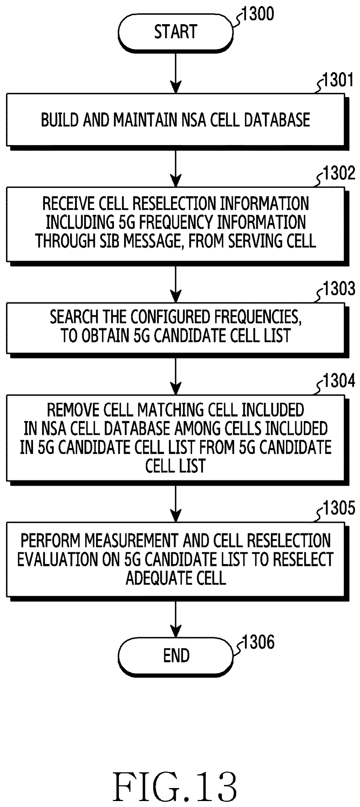

FIG. 13 is a flowchart illustrating an example SA cell measurement and report method according to various embodiments. More specifically, FIG. 13 may relate to the SA cell measurement and report method performed in the cell reselection procedure. In addition to cell reselection from a 5G cell to another 5G cell, the cell reselection procedure of FIG. 13 may also be applied to cell reselection from a 4G cell to a 5G cell or cell reselection from a 3G cell to a 5G cell.

According to an embodiment, the UE may build, and maintain/manage an NSA cell database in operation 1301. For example, the NSA cell database may be stored in a local memory of the UE, or the NSA cell database may be stored and maintained at a server, and the UE may receive the NSA cell database stored and maintained at the server from the server, if the NSA cell database is required. The NSA cell database received from the server may be stored by the UE as the local cell database of the UE.

According to an embodiment, the UE may be registered to a network node in the RRC idle mode, and the UE may receive cell reselection information including 5G frequency information to be measured by the UE through an SIB message from its serving cell (serving base station) in operation 1302.

According to an embodiment, to obtain a 5G candidate cell list for the cell reselection, the UE may perform frequency search on 5G frequencies configured based on the cell reselection information in operation 1303.

According to an embodiment, the UE may compare the pre-configured (e.g., specified) NSA cell database and the obtained 5G candidate cell list, and remove a cell matching the cell included in the NSA cell database among at least one cell included in the 5G candidate cell list from the 5G candidate cell list in operation 1304.

According to an embodiment, to select an adequate cell for performing the cell reselection, the UE may perform measurement and cell reselection evaluation on the remaining cells included in the 5G candidate list from which the cell matching the cell included in the NSA cell database is removed in operation 1305, and the procedure may terminate in operation 1306.

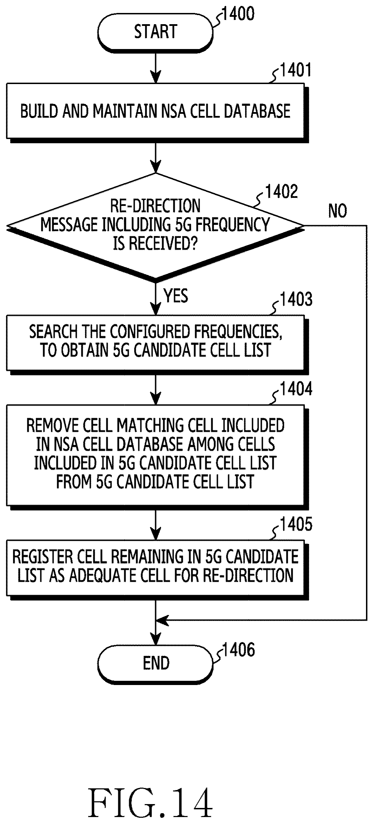

FIG. 14 is a flowchart illustrating an example SA cell measurement and report method according to various embodiments. More specifically, FIG. 14 may relate to the SA cell measurement and report method performed in a re-direction procedure.

According to an embodiment, the UE may build, and maintain/manage an NSA cell database in operation 1401. For example, the NSA cell database may be stored in the local memory of the UE, or the NSA cell database may be stored and maintained at a server, and the UE may receive the NSA cell database stored and maintained at the server from the server, if the NSA cell database is required. The NSA cell database received from the server may be stored by the UE as the local cell database of the UE.

According to an embodiment, the UE may determine whether a re-direction message including 5G frequency information measured by the UE is received in operation 1402. According to an embodiment, as a result of the determination in operation 1402, if determining that the re-direction message including the 5G frequency information is not received, the UE may terminate the method of FIG. 14 in operation 1406. According to an embodiment, as a result of the determination in operation 1402, if determining that the re-direction message including the 5G frequency information is received, the UE may perform the frequency search on the 5G frequency configured based on the cell reselection information, to obtain a 5G candidate cell list for the cell reselection in operation 1403.

According to an embodiment, the UE may compare the pre-configured NSA cell database and the obtained 5G candidate cell list, and remove a cell matching the cell included in the NSA cell database among at least one cell included in the 5G candidate cell list from the 5G candidate cell list in operation 1404.

According to an embodiment, to select an adequate cell for performing the re-direction procedure, the UE may perform the measurement and the cell reselection evaluation on remaining cells included in the 5G candidate list from which the cell matching the cell included in the NSA cell database is removed in operation 1405, and the procedure may terminate in operation 1406.

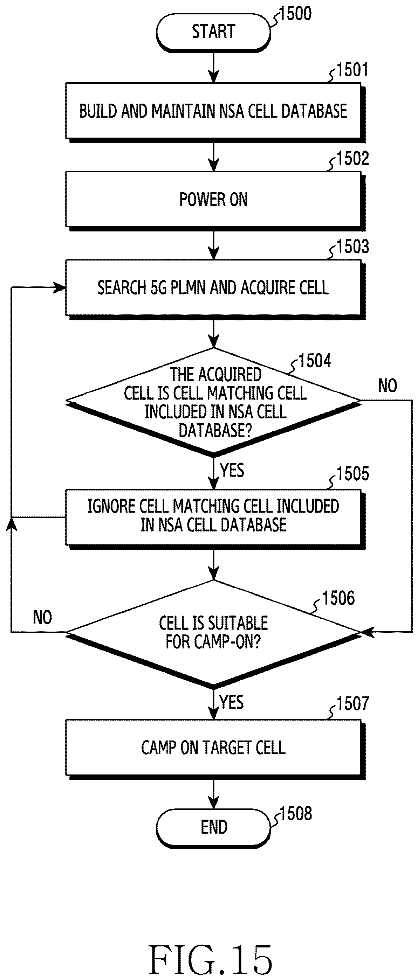

FIG. 15 is a flowchart illustrating an example SA cell measurement and report method according to various embodiments. More specifically, FIG. 15 relates to the SA cell measurement and report method performed in the cell selection immediately after a UE is powered on. The cell selection immediately after the power-on of the UE may be an initial access situation of the UE.

According to an embodiment, the UE may build, and maintain/manage an NSA cell database in operation 1501. The NSA cell database generated and maintained by the UE may be an NSA cell database built, and maintained/managed before the UE is powered off.

According to an embodiment, the UE may be powered on in operation 1502, search the 5G PLMN, and acquire a cell in operation 1503.

According to an embodiment, the UE may compare the pre-configured NSA cell database and the acquired cell, and thus determine whether the acquired cell is a cell matching a cell included in the NSA cell database in operation 1504.

According to an embodiment, if, as a result of the determination in operation 1504, if the acquired cell is a cell matching the cell included in the NSA cell database, the UE may ignore the acquired cell in operation 1505 and return to operation 1503.

According to an embodiment, if, as a result of the determination in operation 1504, if the acquired cell is not a cell matching the cell included in the NSA cell database, the UE may determine whether the acquired cell is a suitable cell for the UE to camp on in operation 1506. According to an embodiment, as a result of the determination in operation 1506, if determining that the acquired cell is not a suitable cell for the UE to camp on, the UE may return to operation 1503. According to an embodiment, as a result of the determination in operation 1506, if determining that the acquired cell is a suitable cell for the UE to camp on, the UE may recognize the acquired cell as a target cell, and camp on the target cell in operation 1507, and the method may terminate in operation 1508.

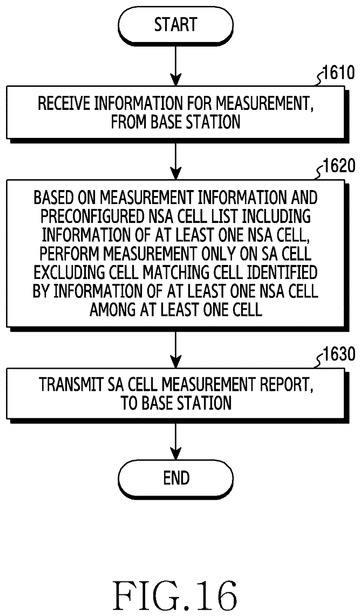

FIG. 16 is a flowchart illustrating an example method of performing a measurement report of a UE according to various embodiments.

According to an embodiment, the UE may receive, from the base station, information for the measurement in operation 1610.

According to an embodiment, the measurement information may include information of a frequency related to at least one cell related to the measurement, or frequency information and identifier information of at least one cell.

According to an embodiment, based on the measurement information and a pre-configured NSA cell list including information of at least one NSA cell, the UE may perform the measurement only on an SA cell excluding a cell matching a cell identified by the information of at least one NSA cell among the at least one cell in operation 1620.

According to an embodiment, the UE may transmit an SA cell measurement report to the base station in operation 1630.

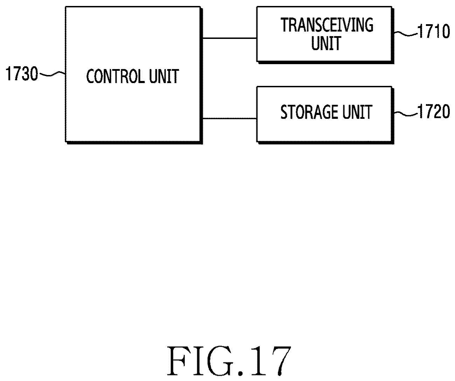

FIG. 17 is a block diagram illustrating an example configuration of a base station according to various embodiments.

Referring to FIG. 17, the base station of the present disclosure may include a transceiving unit (e.g., including communication circuitry) 1710, a storage unit (e.g., including a memory) 1720, and a control unit (e.g., including processing and/or control circuitry) 1730. The transceiving unit 1710, the storage unit 1720 and the control unit 1730 of the base station may operate according to the communication method of the base station as described above. However, the components of the base station are not limited to the above example. For example, the base station may include more components or fewer components than those mentioned above.

The transceiving unit 1710 collectively indicates a receiving unit of the base station and a transmitting unit of the base station and may include various communication circuitry to transmit and receive signals to and from the UE and/or other network entity. The signal transmitted and received to and from the UE and/or other network entity may include control information and data. For doing so, the transceiving unit 1710 may include an RF transmitter for up-converting and amplifying the frequency of a transmit signal, an RF receiver for low-noise-amplifying and down-converting the frequency of a received signal, and so on. However, this is merely an example embodiment of the transceiving unit 1710, and the components of the transceiving unit 1710 are not limited to the RF transmitter and RF receiver. Also, the transceiving unit 1710 may include various configurations for transmitting and receiving signals. In addition, the transceiving unit 1710 may receive a signal over a wired or wireless channel, output the signal to the control unit 1730, and transmit a signal outputted from the control unit 1730 over the wired or wireless channel.

The storage unit 1720 may include a memory and store a program and data required for the operation of the base station. In addition, the storage unit 1720 may store control information or data contained in a signal obtained at the base station. The storage unit 1720 may include a storage medium such as a read only memory (ROM), a random access memory (RAM), a hard disk, a compact disc (CD)-ROM, and a digital versatile disc (DVD), or a combination of storage media.

The control unit 1730 may control a series of processes to enable the base station to operate according to an example embodiment of the present disclosure mentioned above. The control unit 1730 may include at least one or more processors. The processor according to an embodiment of the disclosure may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

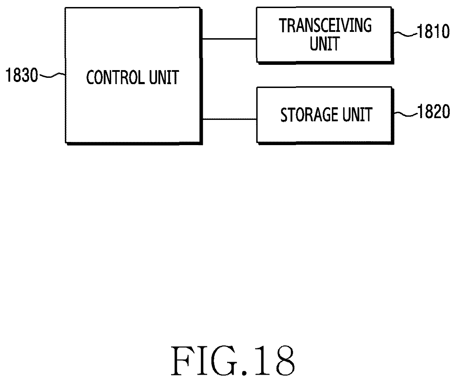

FIG. 18 is a block diagram illustrating an example configuration of a UE according to various embodiments.

Referring to FIG. 18, the UE of the present disclosure may include a transceiving unit (e.g., including communication circuitry) 1810, a storage unit (e.g., including a memory) 1818, and a control unit (e.g., including processing and/or control circuitry) 1830. The transceiving unit 1810, the storage unit 1818 and the control unit 1830 of the UE may operate according to the communication method of the UE described above. However, the components of the UE are not limited to the above example. For example, the UE may include more components or fewer components than those described above. Besides, the transceiving unit 1810, the storage unit 1818, and the control unit 1830 may be implemented as a single chip.

The transceiving unit 1810 collectively indicates a receiving unit of the UE and a transmitting unit of the UE and may include various communication circuitry to transmit and receive signals to and from the base station and/or other network entity. The signal transmitted and received to and from the base station may include control information and data. For doing so, the transceiving unit 1810 may include an RF transmitter for up-converting and amplifying the frequency of a transmit signal, an RF receiver for low-noise-amplifying and down-converting the frequency of a received signal, and so on. However, this is merely an example embodiment of the transceiving unit 1810, and the components of the transceiving unit 1810 are not limited to the RF transmitter and RF receiver. In addition, the transceiving unit 1810 may include various configurations for transmitting and receiving signals. Further, the transceiving unit 1810 may receive a signal over a radio channel, output the signal to the control unit 1830, and transmit a signal outputted from the control unit 1830 over the radio channel.

In addition, the transceiving unit 1810 may receive and output a communication signal to the control unit, and transmit a signal outputted from the control unit to the network entity over a wired or wireless network.

The storage unit 1820 may include a memory and store a program and data required for the operation of the UE. In addition, the storage unit 1820 may store control information or data contained in a signal obtained at the UE. The storage unit 1820 may include a storage medium such as a ROM, a RAM, a hard disk, a CD-ROM, and a DVD, or a combination of storage media.

The control unit 1830 may control a series of processes to enable the UE to operate according to an embodiment of the present disclosure described above. The control unit 1830 may include at least one or more processors. For example, the control unit 1830 may include a communication processor (CP) for controlling the communication and an application processor (AP) for controlling a higher layer such as an application. The CP and/or AP may, according to an embodiment of the disclosure, include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

It should be noted that the above-described diagrams, the example diagrams of the control/data signal transmission method, the example diagrams of the operation procedure, and the configuration diagrams are not intended to limit the scope of the claims of the present disclosure. For example, it shall not be interpreted that all components, entities, or operations described in various example embodiments of the present disclosure are essential components for executing the disclosure, and may be implemented by including only some components without impairing the essence of the present disclosure. In addition, the various example embodiments may be operated in combination with each other as needed. For example, the network entity and the UE may be operated by combining some of the methods described in the present disclosure.

The operations of the base station or the UE mentioned above may be realized by providing a memory device storing corresponding program code in a specific unit of the base station or the UE. That is, the control unit of the base station or the UE may carry out the aforementioned operations by reading and executing the program code stored in the memory device by means of a processor or a central processing unit (CPU).

Various components or modules in an entity, a base station, or a UE described in the present disclosure may operate using a hardware circuit, for example, a complementary metal oxide semiconductor-based logic circuit, firmware and software and/or a hardware circuit such as a combination of hardware, firmware, and/or software embedded into a machine-readable medium. For example, various electrical structures and methods may be carried out using electrical circuits such as transistors, logic gates, and application specific integrated circuit (ASICs).

As for the software, a non-transitory computer-readable storage medium storing one or more programs (software modules) may be provided. One or more programs stored in the computer-readable storage medium may be configured for execution by one or more processors of an electronic device. One or more programs may include instructions for controlling an electronic device to execute the methods according to the various example embodiments of the present disclosure.

Such a program (software module, software) may be stored to a random access memory, a non-volatile memory including a flash memory, a ROM, an electrically erasable programmable ROM (EEPROM), a magnetic disc storage device, a CD-ROM, DVDs or other optical storage device, and a magnetic cassette. It may be stored to a memory combining part or all of those recording media. A plurality of memories may be included.

The program may be stored in an attachable storage device accessible via a communication network such as internet, intranet, local area network (LAN), wide LAN (WLAN), or storage area network (SAN), or a communication network by combining these networks. Such a storage device may access a device which executes an embodiment of the present disclosure through an external port. In addition, a separate storage device on the communication network may access the device which executes an embodiment of the present disclosure.

In the various example embodiments of the present disclosure, the components included in the present disclosure are expressed in a singular or plural form. However, the singular or plural expression is appropriately selected according to an example situation for the convenience of explanation, the present disclosure is not limited to a single component or a plurality of components, the components expressed in the plural form may be configured as a single component, and the components expressed in the singular form may be configured as a plurality of components.

While the various example embodiments of the present disclosure have been particularly described, it will be understood by one of ordinary skill in the art that various changes in form and details may be made therein without departing from the spirit and scope of the present disclosure, including the appended claims and their equivalents. Hence, the scope of the present disclosure includes all modifications or alternatives derived from the scope and spirit of the claims and equivalents thereof. Also, it will be understood that the various embodiments may be combined if necessary. For example, some of the methods explained in the present disclosure may be combined with each other to operate the gNB and the UE. Also, although example embodiments of the present disclosure are suggested based on the 5G and NR systems, other modifications based on the technical ideas of example embodiments of the present disclosure may be applied to other communication systems such as LTE, LTE-A, and LTE-A-Pro systems.

## Claims

1. A method performed by a user equipment (UE) in a wireless communication system, the method comprising:
receiving, from a base station, information for measurement, the information for measurement comprising frequency information related to at least one cell related to the measurement, or the frequency information and identifier information of the at least one cell;
performing the measurement on a standalone (SA) cell excluding a cell matching a cell identified by information of at least one non-standalone (NSA) cell among the at least one cell, based on the information for the measurement and a specified NSA cell list comprising information of the at least one NSA cell; and
transmitting, to the base station, a measurement report of the SA cell.

2. The method of claim 1, wherein the NSA cell list comprises at least one of a local NSA cell list managed by the user equipment or a server NSA cell list managed by a server and transmitted to the user equipment.

3. The method of claim 2, further comprising:
receiving, from the base station, a message comprising candidate cell information related to the measurement and capability information of whether the candidate cell supports at least one of NSA or SA,
wherein, based on the candidate cell being an NSA cell, a frequency related to the candidate cell and an identifier of the candidate cell are added to the local NSA cell list.

4. The method of claim 3, further comprising:
based on the candidate cell being an SA cell, identifying whether the user equipment is registered to a tracking area (TA) different from a TA registered before the message is received; and
based on the user equipment being registered to the different TA, resetting the local NSA cell list.

5. The method of claim 2, further comprising:
transmitting, to the server, information of an NSA cell detected based on a first location of the user equipment to update the server NSA cell list, the first location identified based on a first tracking area code (TAC); and
receiving, from the server, the server NSA cell list related to the first TAC.

6. The method of claim 5, further comprising:
based on the user equipment moving to a second location different from the first location,
removing the server NSA cell list related to the first TAC; and
receiving, from the server, a server NSA cell list related to a second TAC for identifying the second location.

7. The method of claim 1, further comprising:
based on identifying that the information for the measurement comprises the frequency information and the identifier information of the at least one cell, ignoring a measurement request for a cell matching the cell identified by the information of the at least one NSA cell among the at least one cell; and
based on identifying that the information for the measurement comprises only the frequency information related to the at least one cell, searching the frequency to obtain a measurement cell list for the measurement,
wherein the measurement cell list comprises the at least one cell.

8. The method of claim 7, further comprising:
identifying the cell matching the cell identified by the information of the at least one NSA cell among the at least one cell contained in the measurement cell list;
removing the identified cell matching the cell identified by the information of the at least one NSA cell from the measurement cell list; and
performing the measurement on the SA cell contained in the measurement cell list from which the cell matching the cell identified by the information of the at least one NSA cell is removed.

9. The method of claim 1, wherein the identifier information of the at least one cell includes a physical layer cell identifier (PCI).

10. The method of claim 1, wherein the measurement report of the SA cell comprises at least one of a reference signal received power (RSRP), a reference signal received quality (RSRQ), or a signal to interference plus noise ratio (SINR) measured in the SA cell.

11. A user equipment (UE) of a wireless communication system, comprising:
a transceiver;
a processor; and
memory storing instructions that, when executed by the processor, cause the UE to:
receive, from a base station, information for measurement, the information for measurement comprising frequency information related to at least one cell related to the measurement, or the frequency information and identifier information of the at least one cell;
perform the measurement on a standalone (SA) cell excluding a cell matching a cell identified by information of at least one non-standalone (NSA) cell among the at least one cell, based on the information for the measurement and a specified NSA cell list comprising information of the at least one NSA cell; and
transmit, to the base station, a measurement report of the SA cell.

12. The user equipment of claim 11, wherein the NSA cell list comprises at least one of a local NSA cell list managed by the user equipment or a server NSA cell list managed by a server and transmitted to the user equipment.

13. The user equipment of claim 12, wherein the memory stores the instructions that, when executed by the processor, cause the UE to:
receive, from the base station, a message comprising candidate cell information related to the measurement and capability information of whether the candidate cell supports at least one of NSA or SA,
wherein, based on the candidate cell being an NSA cell, a frequency related to the candidate cell and an identifier of the candidate cell are added to the local NSA cell list.

14. The user equipment of claim 13, wherein the memory stores the instructions that, when executed by the processor, cause the UE to::
based on the candidate cell being an SA cell, identify whether the user equipment is registered to a tracking area (TA) different from a TA registered before the message is received; and
based on the user equipment being registered to the different TA, reset the local NSA cell list.

15. The user equipment of claim 12, wherein the memory stores the instructions that, when executed by the processor, cause the UE to:
transmit, to the server, information of an NSA cell detected based on a first location of the user equipment to update the server NSA cell list, the first location identified based on a first tracking area code (TAC); and
receive, from the base station, the server NSA cell list related to the first TAC.
